# EUROPEAN PATENT SPECIFICATION

(11) **EP 1 119 988 B1**
(45) Date of publication and mention of the grant of the patent: **20.08.2008**
(21) Application number: 99970548.6
(22) Date of filing: 01.10.1999
(51) Int. Cl.: H04Q 7/24, H04Q 7/38

(54) **TELECOMMUNICATIONS NETWORK AND METHOD FOR ESTABLISHING A MEETING BETWEEN PARTIES**
TELEKOMMUNIKATIONSNETZ UND VERFAHREN ZUR EINRICHTUNG EINER BESPRECHUNG ZWISCHEN TEILNEHMERN
RESEAU ET PROCEDE DE TELECOMMUNICATIONS SERVANT A ETABLIR UNE REUNION ENTRE DES PARTIES

(30) Priority: 13.10.1998 US 170830
(43) Date of publication of application: 01.08.2001
(73) Proprietor: TELEFONAKTIEBOLAGET LM ERICSSON (publ), 164 83 Stockholm (SE)
(72) Inventor: JONSSON, Björn, S-177 70 Järfälla (SE)
(74) Representative: HOFFMANN EITLE
(86) International application number: PCT/SE1999/001744
(87) International publication number: WO 2000/022855

(56) References cited:
- WO-A-97/13329
- US-A- 5 414 752

## Description

### BACKGROUND OF THE INVENTION

### Technical Field of the Invention

The present invention generally relates to the telecommunications field and, in particular, to a telecommunications network and method for establishing a form of a meeting between a calling party and a called party by negotiating through an intermediary server and avoiding the complete set-up of an end-to-end circuit switched channel or logical circuit.

### Description of Related Art

People that subscribe to a cellular telephone service do so primarily because of the mobility advantage and the availability of various telephony services such as voice, short message service, fax and data communication services, and packet switched services. Unfortunately, there is not a telephony service currently available to subscribers that enables the establishment of a form (e.g., wire-bound terminal, a personal computer, a facsimile machine) of a meeting between a calling party and a called party using a mobile terminal without first requiring the two parties to physically communicate over a circuit channel.

In US-A-5 414 752 a method and a system is disclosed for achieving communication between a customer of a service which can be supplied over a telecommunication network and a supplier of the service. A service order from the customer passes to a service order central where it is parked and allotted an order identity which is transferred through a signal connection together with the order. The service supplier can, himself, configure the method in which the service shall be delivered and the service supplier himself takes the initiative of creating a communication connection with the service order central and therewith refers to the order identity. When the communication connection has been established, the connection is coupled by the service order central with the parked call from the customer and delivery of the service can commence.

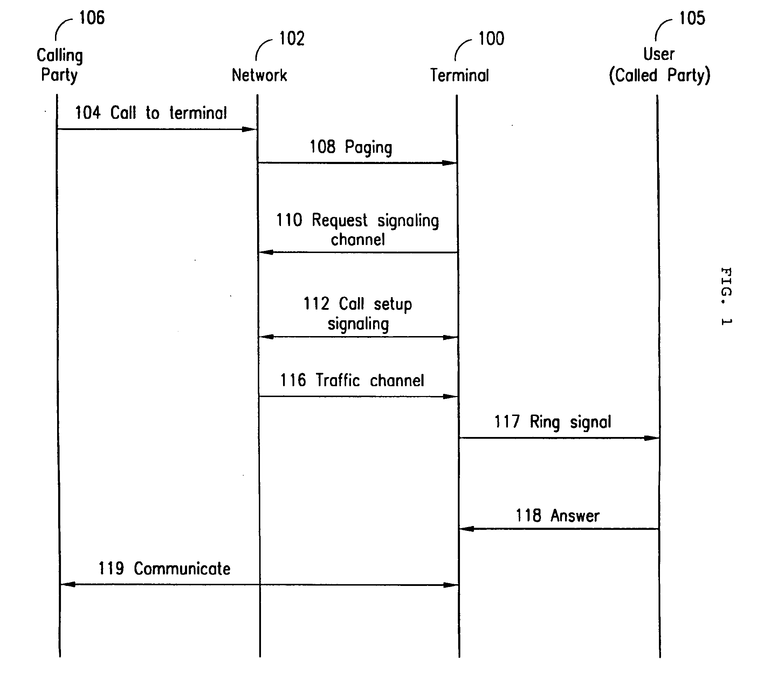

Referring to FIGURE 1, there is a signal sequence chart illustrating the set-up of communications between a conventional mobile terminal 100 and a telecommunications network 102. In response to receiving an incoming call 104 from a calling party 106, the telecommunications network 102 transmits a paging signal 108 to the mobile terminal 100 addressed by the incoming call 104. The mobile terminal 100 then requests a signaling channel 110 with the telecommunications network 102 that enables call set up signaling 112 to occur between the mobile terminal and the telecommunications network. Thereafter, a traffic channel 116 is established between the mobile terminal 100 and the telecommunications network 102, and a ring signal 117 then alerts a called party 105 about the incoming call 104. The called party 105 can answer 118 the ring signal 117 and communicate with the calling party 106 by way of the circuit channel 119. As mentioned above, the calling party 106 and the called party 105 must physically communicate over the circuit channel 119 before establishing a more suitable form of a meeting based on the type of incoming call. For instance, it may be more suitable for the called party 105 to use a wire-bound terminal, personal computer or facsimile machine as the form of the meeting instead of the mobile terminal.

Also problematic, is a situation where a first party (calling party) who wants to communicate with a second party (called party) by establishing a call through a telecommunications network, must decide beforehand which form (e.g., voice) of communication which should be used. Even if the called party has diverted all incoming calls to an answering machine, the form of the communication is usually not changed and the calling party can only leave a voice message whereas, for example, a written message would have been preferred by either party. Therefore, it is desirable to be able to negotiate the form of the meeting and to take into account and match the personal preferences of all parties.

Accordingly, there is a need for a method and telecommunications network including a mobile terminal that negotiates with a service node by exchanging signal information while avoiding the set-up of a traffic channel to, for example, determine conditions for the further handling an incoming call. There is also a need to provide an independently controlled service node. These and other needs are satisfied by the telecommunications network and method of the present invention.

### SUMMARY OF THE INVENTION

The object of the present invention is solved by the subject matter of claims 1 and 7. Preferable embodiments are defined in the dependent claims.

An aspect of the present invention is a telecommunications network and method for establishing a form of a meeting between a calling party and a called party. The method includes routing a call from a calling party to a first agent (e.g., service node) and parking the incoming call within the first agent. The incoming call is then announced to a second agent (e.g., mobile terminal) used by a called party. In response to receiving the incoming call, the first agent makes a call to the second agent through a mobile network, thereby causing the mobile network to transmit a first page towards the mobile terminal. The call is then rejected by the mobile terminal prior to the establishment of a traffic channel between the parties. After receiving the paging signal, the first agent and the second agent negotiate to determine conditions for the further handling of the incoming call.

In accordance with an aspect of the present invention there is provided a telecommunications network and method where a signaling scheme is used to negotiate by way of signaling A-numbers and B-numbers between the first and second agents.

Also in accordance with another aspect of the present invention there is provided a telecommunications network and method where a User-to-User signaling protocol is used to enable negotiations between a first agent and a second agent.

Further in accordance with still another aspect of the present invention there is provided a telecommunications network and method including a mobile terminal utilizing an application programme for communicating in a predefined manner with a service node to exchange signaling information used to establish a form of a meeting between a called party and calling party.

In accordance with another aspect of the present invention there is provided a telecommunications network and method including a mobile terminal displaying a menu used by a called party to select an action based on the received signaling information including a received A-number indicative of a type of event (e.g., incoming call).

Also in accordance with an aspect of the present invention there is provided a telecommunications network and method having a service node independent from the control of a network operator to enable independent service providers to implement services not provided by the network operator.

### BRIEF DESCRIPTION OF THE DRAWINGS

A more complete understanding of the method and apparatus of the present invention may be had by reference to the following detailed description when taken in conjunction with the accompanying drawings wherein:
FIGURE 1 (prior art) is a signal sequence chart illustrating the setting-up of a traffic channel between a conventional mobile terminal and a cellular network;
FIGURE 2 is a diagram of a telecommunications network incorporating an exemplary mobile terminal and service node in accordance with the present invention;
FIGURE 3 is a signal sequence chart illustrating the operation of a first embodiment of the present invention of FIGURE 2;
FIGURE 4 is a signal sequence chart illustrating the operation of a second embodiment of the present invention of FIGURE 2; and
FIGURE 5 is a diagram of signal format of a User-to-User signaling protocol used in the second embodiment of the present invention of FIGURE 4.

### DETAILED DESCRIPTION OF THE DRAWINGS

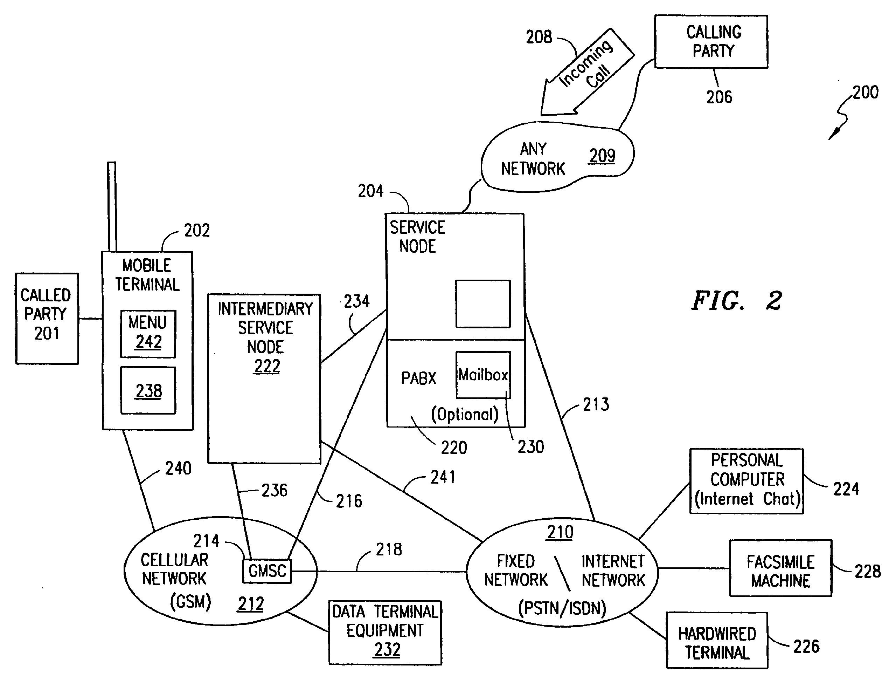

Referring to the Drawings, wherein like numerals represent like parts throughout FIGURES 2-5, there is disclosed a telecommunications network 200 including an exemplary mobile terminal 202 and service node 204 in accordance with the present invention.

Although two embodiments of the mobile terminal 202 and service node 204 incorporated within the telecommunications network 200 will be discussed, those skilled in the art will appreciate that such embodiments are only two of many utilizing the principles of the present invention. Accordingly, the telecommunications network 200 described should not be construed in such a limited manner.

In order to better present and describe the present invention, a detailed description of the interaction between the service node 204 (e.g., first agent) and the mobile terminal 202 (e.g., second agent) will be deferred pending a discussion of the general architecture of the telecommunications network 200.

Referring to FIGURE 2, there is illustrated a diagram of the telecommunications network 200 incorporating the exemplary mobile terminal 202 and the service node 204. Excluding the mobile terminal 202 and the service node 204, the general architecture of the telecommunications network 200 may be based on the Global System for Mobile Communications (GSM) and the Public Switched Telephone Network (PSTN) specifications or any of the other specifications and standards available in the telecommunications field.

For clarity, certain details associated with the telecommunications network 200 including, for example, a mobile services switching center, a base station controller and a local exchange carrier are well known in the industry and as such are not described herein. Therefore, the description below in relation to the telecommunications network 200 describes only the basic components that interact with the mobile terminal 202 and the service node 204.

The telecommunications network 200 includes a calling party 206 that transmits an incoming call 208 by way of a network 209 (e.g., any type of network) to the service node 204. The incoming call 208 is initially addressed to a number associated with a called party 201 and is first routed by the network 209 to a personal agent of the called party located in the service node 204. Thereafter, negotiation occurs between the mobile terminal 202 and the service node 204 to establish a form of a meeting between the calling party 206 and the called party 201 (described below). The personal agent can manage many types of incoming calls 208 including, for example, voice calls, facsimile calls, data calls, packet data calls, short message service calls, video calls and a new entry in an Internet chat.

The terminals or forms used for the meeting after negotiations between the service node 204 and the mobile terminal 202 can be, for example, a personal computer 224, a hard-wired terminal 226, a facsimile machine 228, a mailbox 230 within a private automatic branch exchange (PABX) 220, a data terminal equipment 232 or a scheduled meeting at a later time. The scheduled meeting is negotiated again at a later time. The form 224, 226, 228, 230 and 232 of the meeting is generally coupled to a fixed public network/internet network 210, a cellular network 212, or a private network (e.g., PABX 220).

More specifically, the service node 204 preferably connects to a multiple of communication networks which may include the fixed network 210 and the cellular network 212. The fixed network 210 can be, for example, a Public Switched Telephone Network (PSTN) and/or Integrated Services Digital Network (ISDN) connected by link 213 to the service node 204. The cellular network 212 may be a conventional GSM network incorporating a gateway mobile services switching center (GMSC) 214. The GMSC 214 enables the service node 204 to connect with the cellular network 212 and the fixed network 210 over links 216 and 218, respectively. The cellular network 212 is also coupled by link 240 to the mobile terminal 202. It should be understood that the connections may be through direct physical links (described above) or indirect physical links through redirections over other connected networks (not shown).

The service node 204 preferably provides and controls telephony services independent of the cellular network 212 and the fixed network 210. However, the service node 204 can be incorporated within and controlled by the network operators of either the fixed network 210 or the cellular network 212. Moreover, the telecommunications network 200 may include at least one more service node 222 coupled by data link 234 to the service node 204 and by data links 236 and 241 to the cellular network 212 and the fixed network 210, respectively.

In addition, the service node 204 may incorporate or be coupled to the private automatic branch exchange (PABX) 220 or other private networks generally controlled by a company. The company can use the PABX 220 and the service node 204 to control the services and restrictions for the mobile terminal 202 in the same manner the company can control the services and restrictions of an office telephone (not shown) having a fixed connection.

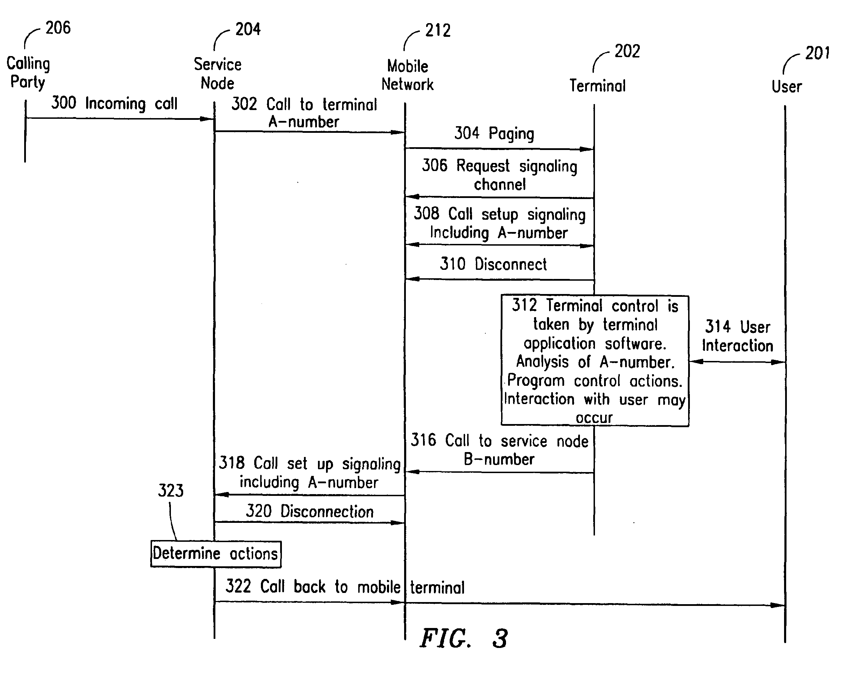

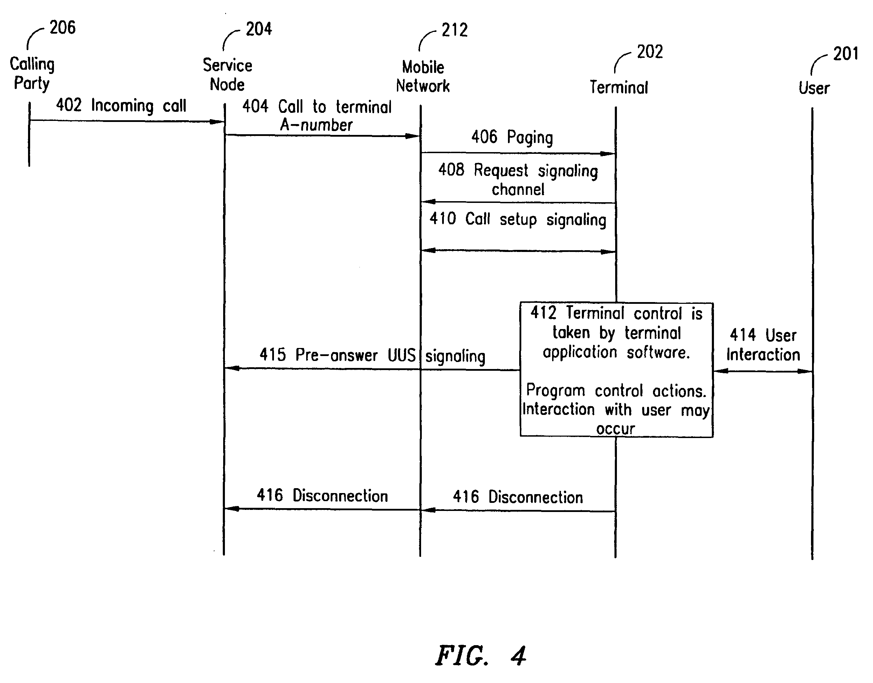

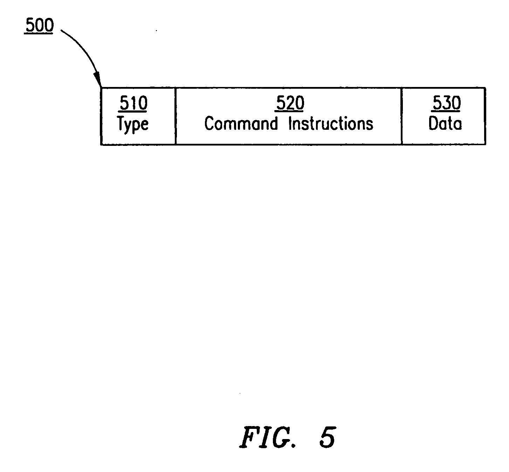

As mentioned earlier, a detailed discussion is provided below with reference to FIGURE 3 (first embodiment) and FIGURES 4 and 5 (second embodiment) as to how the mobile terminal 202 having an application programme 238 (application module) operates to negotiate with the service node 204 to establish (for example) the form 224, 226, 228, 230 or 232 of a meeting between the calling party 206 and the called party while avoiding the set-up of a traffic channel.

Reference to FIGURE 3. there is illustrated a signal diagram of the operation of the first embodiment of the present invention. Beginning at step 300, the service node 204 receives and parks the incoming call 208 transmitted by the calling party 206 and addressed to the mobile terminal 202.

At step 302, the service node 204 makes an outgoing call to the mobile network 202 which, as a first step in a call setup procedure, transmits a paging signal 304 to the mobile terminal 202. The mobile terminal 202 responds to the paging signal 304 by requesting a signaling channel at step 306. The signaling channel is then used at step 308 to exchange between the mobile terminal 202 and the network 212 any pre-answer signaling including, for example, one predefined A-number from a plurality of predefined A-numbers, where the one A-number indicates a type of event or incoming call 208. The mobile terminal 202 can then ascertain what action to take in view of the received A-number having stored the possible meanings associated with each predefined A-number.

In other words, the service node 204 using pre-answer signaling transmits (step 308) to the mobile terminal 202 the one A-number from the plurality of predefined A-numbers, where each predefined A-number has a specific functional meaning for the mobile terminal and the service node 204. The one predefined A-number transmitted depends on the type (e.g., voice call, Internet chat) of incoming call 208 or other event, e.g. onhook by the caller, received by the service node 204. For example, if the service node 204 identifies an incoming call 208 as a packet data message then a specific A-number using circuit switched technology may be transmitted during pre-answer signaling to the mobile terminal 202. The above example is especially advantageous when the mobile terminal 202 can only receive circuit switched messages, because the incoming call 208 having the form of the packet data message can still be received by the called party at the form 224, 228 or 232 capable of receiving packet data messages.

The call set-up at step 308 is, however, not completed and the mobile terminal 202 disconnects the call at step 310 prior to the normal request for a traffic channel.

In response to receiving the paging signal 304 and the pre-answer signaling, a determination is made or has already been made at step 312 by the called party 201 about whether to initiate the application programme 238 (see FIGURE 2) to display (step 314) on the menu 242 a list of possible options that may be selected by the called party, or to initiate the application programme 238 to communicate with the service node 204 in a predefined manner. The list of options displayed on the menu 242 can be determined by the application programme 238 depending on the particular A-number received from the service node 204.

Assuming an action is determined by the terminal application program during step 312 as how to handle the incoming call 208, then at step 316 the application programme 238 transmits an outgoing call (e.g., call back) containing a selected one of a plurality of predefined B-numbers from the mobile terminal 202 to the service node 204. The particular predefined B-number selected is based on the A-number received during pre-answer signaling and the user selection (if any) at the menu 242. And, the particular predefined B-number operates to control or request further actions by the service node 204 to establish the form 224, 226, 228, 230 or 232 of a meeting. It is possible for the service node 204 to associate the outgoing call from the responding terminal (steps 316-318) with the original call from the service node (step 302) by using the A-number provided by the responding terminal (step 318).

More specifically, the application programme 238 of the mobile terminal 202 follows predefined and preprogrammed actions based on the particular A-number received during the pre-answer signaling in selecting the predefined B-number used in the outgoing call. In addition, it should be understood that the B-number selected by the Application programme 238 may address the second service node 222 (FIGURE 2) which receives instructions from the first service node 204 through the data link 234. In the following it is assumed that the B-number used is an address to the service node 204. However, it should be understood that this assumption is only exemplary and that said B-number can equally well address the second service node 222.

At step 318 the mobile network 212 establishes signaling with the service node 204 using the predefined B-number. In response to receiving the outgoing call, the service node 204 responds by first disconnecting the call at 320 and second by transmitting (step 322) an answer call containing another predefined A-number to the mobile terminal 202 through the mobile network 212. The answer call operates to confirm the requested actions to indicate that an error occurred and that further actions are required by the mobile terminal 202, or to indicate that continued negotiations with the called party 201 are required.

The service node 204 determines at step 323, which A-number should be used in step 322 being indicative of a requested action at the receiving terminal 202. It should be understood that a negotiation may require several turns of such signaling back and forth between the service node 204 and the mobile terminal 202 to determine the actions needed to handle the original incoming call 208.

In addition, the service node 204 can be preprogrammed to perform a predetermined action depending on the type of incoming call 208 and then inform the mobile terminal 202 and/or calling party 206 of such action using a predefined A-number. In such a situation, the mobile terminal 202 need not transmit any outgoing call back to the service node. For example, the service node 204 may be preprogrammed to take certain actions in response to a certain event such as receiving a call and transferring it to an answering machine (not shown). The service node 204 may then inform the mobile terminal 202 in accordance with the present invention about what actions have been taken.

Referring to FIGURE 4, there is illustrated a signaling diagram of the operation of the second embodiment of the present invention. Beginning at step 402, the service node 204 receives and parks an incoming call 208 transmitted by the calling party 206 and addressed to the mobile terminal 202.

At step 404, the service node 204 makes an outgoing call to the network 212 which, in turn, transmits a paging signal at step 406 to the mobile terminal 202. As in the first embodiment, a signaling channel is requested at step 408 and established at step 410 in order to exchange pre-answer signaling. However, in the second embodiment a more extensive pre-answer signaling may occur by use of a User-to-User protocol such as, for example, that specified in the GSM standard. Using the User-to-User protocol the mobile terminal 202 now routes the pre-answer signaling information at steps 412 and 415 between the application programme 238 and the service node 204.

An exemplary format of the pre-answer signal, using the User-to-User protocol, is illustrated in FIGURE 5. The application programme 238 first analyses a preamble 510 of the signaling format 500 to determine the type of signaling. If the signal format indicates an ordinary call, then the normal procedure is followed according to FIGURE 1. Otherwise, the application programme 238 analyses the following block of data 520 (e.g., command instructions) which is interpreted as an address to an executable module of the application programme 238. The last block of data 530 represents data to be processed by the executable module and used to accomplish the same results as in steps 312, 314, 316 and 318 of the first embodiment.

Referring again to FIGURE 4, the User-to-User signaling takes place at step 415 between the calling party 201 and the service node 204. As in the first embodiment, user interaction may occur at step 414 where, for example, the application programme 238 may display a list of selection to the user 201. After completion of the User-to-User signaling but prior to the establishment of a traffic channel the call is disconnected by the application programme 238 at step 416. The further actions may require the application programme 238 of the mobile terminal 202 to initiate a call back to the service node 204 to execute a second exchange of signal information by the method of User-to-User signaling.

Following are some examples of how the present invention can be utilized to permit the negotiation between a user terminal and service node. One such example of an event (e.g., incoming call) being registered at the service node concerns financial transactions, where traditionally when requesting such services a voice prompt is used in the negotiation and the requested transaction must either be completed or interrupted. Whereas, the present invention allows the financial transaction to be initiated in a first step followed by disconnection of the communication and a completion of the financial transaction in a second step whereby the service node makes a call back to the user and whereby the service node exchanges information with the terminal in a pre-answer mode. For instance, a user that requested a transfer of money from a bank account to a personal smart card wallet may be informed that the bank account does not hold the amount requested but that the requested transfer may be finished as soon as the amount is payable. The user may accept this and thereafter disconnects. And, when the amount is payable and the bank calls the user and transfers the requested amount in a pre-answer mode not requiring a voice or data channel to be set up. Thus, the transaction can be completed without the user being disturbed. The user can later be informed by the terminal that the transaction has been completed.

Another example of an event concerns the popular internet service "Internet Chat". This service normally requires all parties to be on line simultaneously, however, a participant in an Internet Chat, who is off line for a certain time, may request a personal agent at a service node to respond in their place to a new entry in the Internet Chat. The response may comprise a message that the addressed person is off line and a question if a paging should be made to the person. In accordance with the present invention, the paged person can then inform the service node how they want to respond to the invitation, for example, the paged person may intend to go on line in a while or that a response will be given at a later time.

Still another example concerns the reception of a facsimile message at the service node. The service node receives and stores the facsimile message and, according to the present invention, pages the user to inform them about the received facsimile message. The service node and user are then disconnected whereupon the user can decide to receive the facsimile message at a lap-top computer connected to the mobile terminal, for example. The user then requests the service node to transfer the facsimile message in a data channel set up through the mobile terminal of the user.

From the above description and examples it is readily understood that the present invention admits also the type of traffic channel to be determined in said negotiation by means of signaling, e.g. a voice traffic channel or data traffic channel. Also, it should be readily understood that several services, exemplified above, require the exchange of signal information in order to determine what actions should be taken by the service node. And, it is also comprehended that the signaling may not require the capacity of a traffic channel.

Therefore from the foregoing, it can be readily appreciated by those skilled in the art that the present invention provides a telecommunications network and method for negotiating between a calling party and a called party while avoiding the setting-up of a traffic channel to, for example, determine conditions for the further handling of an incoming call. Also, the mobile telecommunications network as disclosed may include a mobile terminal utilizing an application module for communicating in a predefined manner with a service node.

Although two embodiments of the method and apparatus of the present invention have been illustrated in the accompanying Drawings and described in the foregoing Detailed Description, it will be understood that the invention is not limited to the embodiments disclosed, but is capable of numerous rearrangements, modifications and substitutions. The scope of the invention is set forth and defined by the following claims.

## Claims

1. A method used in a telecommunications network (200) where a mobile terminal (202) communicates with a service node (204) to establish a form of a meeting between a calling party (206) and a called party (201), said method comprising the steps of:
receiving and parking (300; 402) an incoming call (208) within the service node (204), said incoming call initiated by a calling party (206) and addressed to the mobile terminal (202) used by a called party (201);
transmitting (302, 304, 308; 404, 406, 410), in response to receiving the incoming call (208), a first outgoing call from the service node (204) to the mobile terminal (202), said first outgoing call includes signaling information containing a predefined A-number from a plurality of predefined A-numbers that are dependent upon a type of the incoming call;
disconnecting (310) the first outgoing call in response to receiving the signaling information prior to establishing a traffic channel between the first agent (204) and the second agent (202); and
operating (312; 412), in response to receiving the first outgoing call, an application module (238) within the mobile terminal (202) that negotiates with an application module within the service node (204) to establish the form of the meeting.

2. The method of Claim 1, wherein the step of receiving and parking (300; 402) further includes determining whether the type of the incoming call (208) is a selected one of a voice call, a facsimile call, a data call, a packet data call, a video call, a new entry in an Internet chat and a short message service call.

3. The method of Claim 1, wherein the step of operating (312; 412) further includes selecting the form of the meeting from a list displayed on a menu (242).

4. The method of Claim 1, wherein said step of operating (312; 412) further includes the step of initiating from the mobile terminal (202) to the service node (204) a second outgoing call containing one of a plurality of predefined B-numbers, where the one predefined B-number is selected based on the received A-number.

5. The method of Claim 1, wherein the step of operating (312; 412) further includes identifying a responsive action within the application module (238) of the mobile terminal based on the received predefined A-number.

6. The method of Claim 1, wherein the step of operating (312; 412) further includes determining the form of the meeting to be located at a selected one of the first agent (204), a mailbox (230) in a private automatic branch exchange (220), a personal computer (224), a hardwired terminal (226), a facsimile machine (228) and a scheduled meeting at a later time.

7. A telecommunications network (200) for establishing a form of a meeting between a calling party (206) and a called party (201), said telecommunications network comprising:
a service node (204) arranged to receive and park an incoming call (208) initiated by the calling party (206);
a mobile terminal (202) used by the called party (201) and addressed by the incoming call (208); and
a signaling protocol for transmitting messages between the service node (204) and the mobile terminal (202),
wherein the messages include a first outgoing call (302, 304, 308; 404, 406, 410) including an A-number transmitted from the service node (204) to the mobile terminal (202); where said mobile terminal and service node include an application module (238) for negotiating based on said first outgoing call the form of the meeting while avoiding a set-up of a traffic channel.

8. The telecommunications network of Claim 7, wherein the type of incoming call (208) further includes a selected one of a voice call, a facsimile call, a data call, a packet data call, a video call, a new entry in an Internet chat and a short message service call.

9. The telecommunications network of Claim 7, wherein said mobile terminal (202) further includes a menu (242) having a list for selecting the form of the meeting.

10. The telecommunications network of Claim 9, wherein said form of the meeting further includes a selected one of the mobile terminal (202), a mailbox (230) in a private automatic branch exchange (220), a personal computer (224), a hardwired terminal (226), a facsimile machine (228), an application server and a data terminal equipment (232) and a scheduled meeting at a later time.

11. The telecommunications network of Claim 7, further comprising an intermediary service node (222) coupled between the mobile terminal (202) and the service node (204).

12. The telecommunications network of Claim 7, wherein the messages further include a second outgoing call (316, 318) including a B-number transmitted from the mobile terminal (202) to the service node (204).

13. The telecommunications network of Claim 7, wherein the messages further includes messages configured according to a User-to-User protocol including a header (510) indicative of a type of communication, a first data block (520) indicative of program controlled actions to be taken at the first agent (204), and a second data block (530) indicative of data to be processed at the first agent.

## Patentansprüche

1. In einem Telekommunikationsnetzwerk (200) verwendetes Verfahren, wobei ein Mobilendgerät (202) mit einem Dienstknoten (204) kommuniziert, um eine Form einer Konferenz zwischen einem anrufenden Beteiligten (206) und einem angerufenen Beteiligten (201) aufzubauen, wobei das Verfahren die Schritte umfasst zum:
Empfangen und Parken (300; 402) eines eingehenden Anrufs (208) innerhalb des Dienstsknotens (204), wobei der eingehende Anruf von einem anrufenden Beteiligten (206) initiiert ist und an das von einem angerufenen Beteiligten (201) verwendete Mobilendgerät (202) adressiert ist;
Übertragen (302, 304, 308; 404, 406, 410), in Ansprechen auf das Empfangen des eingehenden Anrufs (208), eines ersten abgehenden Anrufs von dem Dienstknoten (204) zu dem Mobilendgerät (202), wobei der erste abgehende Anruf eine Signalisierungsinformation mit einer vordefinierten A-Nummer von einer Vielzahl vordefinierter A-Nummern enthält, die unabhängig von einem Typ des eingehenden Anrufs sind;
Trennen (310) des ersten abgehenden Anrufs in Ansprechen auf ein Empfangen der Signalisierungsinformation vor Aufbauen eines Verkehrskanals zwischen dem ersten Agenten (204) und dem zweiten Agenten (202); und
Betreiben (312; 412), in Ansprechen auf das Empfangen des ersten abgehenden Anrufs, eines Anwendungsmoduls (238) innerhalb des Mobilendgerätes (202), das mit einem Anwendungsmodul innerhalb des Dienstknotens (204) verhandelt, um die Form der Konferenz aufzubauen.

2. Verfahren von Anspruch 1, wobei der Schritt zum Empfangen und Parken (300; 402) ferner ein Bestimmen enthält, ob der Typ des eingehenden Anrufs (208) ein Ausgewählter ist von einem Sprachanruf, Telefaxanruf, Datenanruf, Paketdatenanruf, Videoanruf, einem neuen Eintrag in einem Internet-Chat und einem Kurznachrichtendienstanruf.

3. Verfahren von Anspruch 1, wobei der Schritt zum Betreiben (312; 412) ferner ein Auswählen der Form der Konferenz aus einer in einem Menü (242) angezeigten Liste enthält.

4. Verfahren von Anspruch 1, wobei der Schritt zum Betreiben (312; 412) ferner den Schritt zum Initiieren, von dem Mobilendgerät (202) zu dem Dienstknoten (204), eines zweiten abgehenden Anrufs mit einer von einer Vielzahl vordefinierter B-Nummern enthält, wobei die eine vordefinierte B-Nummer auf Grundlage der empfangenen A-Nummer ausgewählt ist.

5. Verfahren von Anspruch 1, wobei der Schritt zum Betreiben (312; 412) ferner ein Identifizieren einer Reaktionshandlung innerhalb des Anwendungsmoduls (238) des Mobilendgerätes auf Grundlage der empfangenen vordefinierten A-Nummer enthält.

6. Verfahren von Anspruch 1, wobei der Schritt zum Betreiben (312; 412) ferner ein Bestimmen der Form der Konferenz enthält, die sich bei einem Ausgewählten befinden soll von dem ersten Agenten (204), einer Mailbox (230) in einer Nebenstellenanlage (220), einem Personalcomputer (224), einem fest verdrahteten Endgerät (226), einem Telefaxgerät (228) und einer geplanten Konferenz zu einer späteren Zeit.

7. Telekommunikationsnetzwerk (200) zum Aufbauen einer Form einer Konferenz zwischen einem anrufenden Beteiligten (206) und einem angerufenen Beteiligten (201), wobei das Telekommunikationsnetzwerk umfasst:
einen Dienstknoten (204), der eingerichtet ist zum Empfangen und Parken eines von dem anrufenden Beteiligten (206) initiierten eingehenden Anrufs (208);
ein Mobilendgerät (202), das von dem angerufenen Beteiligten (201) verwendet und durch den eingehenden Anruf (208) adressiert ist; und
ein Signalisierungsprotokoll zum Übertragen von Nachrichten zwischen dem Dienstknoten (204) und dem Mobilendgerät (202), wobei die Nachrichten einen ersten abgehenden Anruf (203, 304, 308; 404, 406, 410) mit einer von dem Dienstknoten (204) an das Mobilendgerät (202) übertragenen A-Nummer enthalten; wobei das Mobilendgerät und der Dienstknoten ein Anwendungsmodul (238) enthalten zum Aushandeln, auf Grundlage des ersten abgehenden Anrufs, der Form der Konferenz mit Vermeidung einer Errichtung eines Verkehrskanals.

8. Telekommunikationsnetzwerk von Anspruch 7, wobei der Typ des eingehenden Anrufs (208) ferner einen Ausgewählten enthält von einem Sprachanruf, einem Telefaxanruf, einem Datenanruf, einem Paketdatenanruf, einem Videoanruf, einem neuen Eintrag in einem Internet-Chat und einem Kurznachrichtendienstanruf.

9. Telekommunikationsnetzwerk von Anspruch 7, wobei das Mobilendgerät (202) ferner ein Menü (242) mit einer Liste zum Auswählen der Form der Konferenz enthält.

10. Telekommunikationsnetzwerk von Anspruch 9, wobei die Form der Konferenz ferner ein Ausgewähltes enthält von dem Mobilendgerät (202), einer Mailbox (230) in einer Nebenstellenanlage (220), einem Personalcomputer (224), einem fest verdrahteten Endgerät (226), einem Telefaxgerät (228), einem Anwendungsserver und einer Datenendgeräteinrichtung (232) und einer geplanten Konferenz zu einem späteren Zeitpunkt.

11. Telekommunikationsnetzwerk von Anspruch 7 mit ferner einem Zwischen-Dienstknoten (222), der mit dem Mobilendgerät (202) und dem Dienstknoten (204) gekoppelt ist.

12. Telekommunikationsnetzwerk von Anspruch 7, wobei die Nachrichten ferner einen ersten abgehenden Anruf (302, 304, 308; 404, 406, 410) mit einer von dem Dienstknoten (204) an das Mobilendgerät (202) übertragenen A-Nummer und einen zweiten abgehenden Anruf (316, 318) mit einer von dem Mobilendgerät (202) an den Dienstknoten (204) übertragenen B-Nummer enthalten.

13. Telekommunikationsnetzwerk von Anspruch 7, wobei die Nachrichten ferner Nachrichten enthalten, die gemäß einem Anwender-Anwender-Protokoll konfiguriert sind, mit einem Header (510), der einen Kommunikationstyp angibt, einem ersten Datenblock (520), der bei dem ersten Agenten (204) zu unternehmende programmgesteuerte Handlungen angibt, und einem zweiten Datenblock (530), der bei dem ersten Agenten zu verarbeitende Daten angibt.

## Revendications

1. Procédé utilisé dans un réseau de télécommunication (200) dans lequel un terminal mobile (202) communique avec un noeud de desserte (204) afin d'établir une forme de conférence entre une partie appelante (206) et une partie appelée (201), ledit procédé comprenant les étapes consistant à :
recevoir et mettre en attente (300, 402) un appel entrant (208) sur le noeud de desserte (204), ledit appel entrant étant envoyé par une partie appelante (206) et étant adressé au terminal mobile (202) utilisé par une partie appelée (201) ;
émettre (302, 304, 308 ; 404, 406, 410), en réponse à la réception de l'appel entrant (208), un premier appel sortant entre le noeud de desserte (204) et le terminal mobile (202), ledit premier appel sortant comprenant des informations de signalisation contenant un numéro A prédéterminé, parmi une pluralité de numéros A prédéterminés qui dépendent d'un type de l'appel entrant ;
déconnecter (310) le premier appel sortant en réponse à la réception des informations de signalisation, avant d'établir un canal de trafic entre le premier agent (204) et le second agent (202) ; et
faire fonctionner (312 ; 412), en réponse à la réception du premier appel sortant, un module applicatif (238) dans le terminal mobile (202) qui négocie avec un module applicatif dans le noeud de desserte (204), afin d'établir la forme de la conférence.

2. Procédé selon la revendication 1, dans lequel l'étape de réception et de mise en attente (300 ; 402) comprend en outre l'étape consistant à déterminer si le type de l'appel entrant (208) est un type sélectionné parmi appel vocal, appel de télécopie, appel de données, appel de données en paquets, appel vidéo, nouvelle entrée dans une session de conversation internet et appel de service de messages courts.

3. Procédé selon la revendication 1, dans lequel l'étape de fonctionnement (312 ; 412) comprend en outre l'étape consistant à sélectionner la forme de la conférence dans une liste affichée dans un menu (242).

4. Procédé selon la revendication 1, dans lequel ladite étape de fonctionnement (312 ; 412) comprend en outre l'étape consistant à lancer entre le terminal mobile (202) et le noeud de desserte (204) un second appel sortant contenant un numéro B parmi une pluralité de numéros B prédéterminés, le numéro B prédéterminé étant sélectionné en fonction du numéro A reçu.

5. Procédé selon la revendication 1, dans lequel l'étape de fonctionnement (312 ; 412) comprend en outre l'étape consistant à identifier une action de réponse dans le module applicatif (238) du terminal mobile, en fonction du numéro A prédéterminé reçu.

6. Procédé selon la revendication 1, dans lequel l'étape de fonctionnement (312 ; 412) comprend en outre l'étape consistant à sélectionner la forme de la conférence qui se situe soit chez le premier agent (204), soit dans une boîte à lettres (230) d'un central automatique privé (220), soit dans un ordinateur personnel (224), soit dans un terminal filaire (226), soit dans une machine de télécopie (228), soit une conférence prévue à une date ultérieure.

7. Réseau de télécommunication (200) destiné à établir une forme de conférence entre une partie appelante (206) et une partie appelée (201), ledit réseau de télécommunication comprenant :
un noeud de desserte (204), conçu pour recevoir et mettre en attente un appel entrant (208) envoyé par la partie appelante (206) ;
un terminal mobile (202) utilisé par la partie appelée (201) et adressé par l'appel entrant (208) ; et
un protocole de signalisation destiné à la transmission de messages entre le noeud de desserte (204) et le terminal mobile (202), les messages comprenant un premier appel sortant (302, 304, 308 ; 404, 406, 410) incluant un numéro A, émis entre le noeud de desserte (204) et le terminal mobile (202) et le terminal mobile et le noeud de desserte comprenant un module applicatif (238) destiné à négocier la forme de la conférence, en fonction dudit premier appel sortant, tout en évitant d'établir un canal de trafic.

8. Réseau de télécommunication selon la revendication 7, dans lequel le type de l'appel entrant (208) comprend en outre un type sélectionné parmi appel vocal, appel de télécopie, appel de données, appel de données en paquets, appel vidéo, nouvelle entrée dans une session de conversation internet et appel de service de messages courts.

9. Réseau de télécommunication selon la revendication 7, dans lequel ledit terminal mobile (202) comprend en outre un menu (242) offrant une liste pour y sélectionner la forme de la conférence.

10. Réseau de télécommunication selon la revendication 9, dans lequel la forme de la conférence comprend en outre une forme sélectionnée parmi terminal mobile (202), boîte à lettres (230) d'un central automatique privé (220), ordinateur personnel (224), terminal filaire (226), machine de télécopie (228), serveur d'applications et équipement de terminal de données, et conférence prévue à une date ultérieure.

11. Réseau de télécommunication selon la revendication 7, comprenant en outre un noeud de desserte intermédiaire (222) couplé entre le terminal mobile (202) et le noeud de desserte (204).

12. Réseau de télécommunication selon la revendication 7, dans lequel les messages comprennent en outre un second appel sortant (316, 318) comprenant un numéro B, émis entre le terminal mobile (202) et le noeud de desserte (204).

13. Réseau de télécommunication selon la revendication 7, dans lequel les messages comprennent en outre des messages configurés selon un protocole d'utilisateur à utilisateur, incluant un en-tête (510) indiquant un type de communication, un premier bloc de données (520) indiquant des actions commandées par programme à exécuter par le premier agent (204) et un second bloc de données indiquant des données à traiter par le premier agent.
